# EUROPÄISCHE PATENTANMELDUNG

(11) **EP 3 404 635 A1**
(43) Veröffentlichungstag der Anmeldung: **21.11.2018**
(21) Anmeldenummer: 18172862.7
(22) Anmeldetag: 17.05.2018
(51) Int. Cl.: G08C 17/02, B25J 13/00, B25J 13/06, B25J 19/06

(54) **FERNSTEUEREINRICHTUNG**

(30) Priorität: 19.05.2017 DE 102017208531
(71) Anmelder: HOMAG GmbH, 72296 Schopfloch (DE)
(72) Erfinder: JOHANNSEN, Heiko, 72160 Horb (DE)
(74) Vertreter: Hoffmann Eitle

(57) **Zusammenfassung**

Die Erfindung betrifft eine Fernsteuereinrichtung zur Interaktion mit einer Maschine, insbesondere einer Holzbearbeitungsmaschine. Die Fernsteuereinrichtung umfasst zumindest ein erstes Bedienelement (12, 13, 15, 16, 18, 19, 20) zur Durchführung einer Bedienoperation an der Bearbeitungsmaschine sowie zumindest ein zweites Bedienelement (14, 23) zur Durchführung einer sicherheitsrelevanten Bedienoperation an der Bearbeitungsmaschine.

## Beschreibung

### Technisches Gebiet

Die Erfindung betrifft eine Fernsteuereinrichtung zur Interaktion mit einer Maschine, insbesondere einer Holzbearbeitungsmaschine. Mit einer solchen Maschine kann beispielsweise eine Bearbeitung an einem sich fortlaufend oder intermittierend bewegenden Werkstück, oder einem zumindest zeitweise fixierten Werkstück durchgeführt werden.

### Stand der Technik

Im Stand der Technik sind kabelgebundene Fernsteuereinrichtungen für Bearbeitungsmaschinen bekannt. Allerdings stellen kabelgebundene Fernsteuereinrichtungen eine Behinderung der Bewegungsfreiheit des Maschinenbedieners dar. Auch ergeben sich durch Kabel Gefahrenquellen am Arbeitsplatz, da der Maschinenbediener über ein solches Kabel stolpern kann. Generell werden kabelgebundene Fernsteuereinrichtungen als relativ unkomfortabel empfunden.

### Gegenstand der Erfindung

Es ist ein Ziel der vorliegenden Erfindung, die zuvor erwähnten Nachteile zumindest teilweise zu beheben. Insbesondere ist es ein Ziel der vorliegenden Erfindung, den Bedienungskomfort zu erhöhen und die Variabilität bei der Anwendung zu erhöhen.

Die vorliegende Erfindung stellt eine Fernsteuereinrichtung gemäß Anspruch 1 bereit. Weitere bevorzugte Ausführungsformen sind in den abhängigen Ansprüchen aufgeführt oder nachfolgend beschrieben. Ferner betrifft die vorliegende Erfindung ein System umfassend eine Maschinensteuereinrichtung sowie eine mit dieser interagierenden Fernsteuereinrichtung.

Die vorliegende Erfindung stellt eine Fernsteuereinrichtung zur Interaktion mit einer Bearbeitungsmaschine bereit. Bei der genannten Bearbeitungsmaschine kann es sich um eine Holzbearbeitungsmaschine handeln. Die Fernsteuereinrichtung weist auf: Zumindest ein erstes Bedienelement zur Durchführung einer Bedienoperation an der Bearbeitungsmaschine und zumindest ein zweites Bedienelement zur Durchführung einer sicherheitsrelevanten Bedienoperation an der Bearbeitungsmaschine. Die Fernsteuereinrichtung umfasst ferner eine Kommunikationseinrichtung, die eingerichtet ist, einen Datenaustausch mit einer definierten Wiederholungsrate durchzuführen.

Da die Fernsteuereinrichtung über die genannte Kommunikationseinrichtung verfügt, ist es möglich, die Durchführbarkeit der sicherheitsrelevanten Bedienoperation an der Bearbeitungsmaschine zu überprüfen oder sicherzustellen. Dabei wird mit einer definierten Wiederholungsrate, insbesondere in bestimmten Zeitabständen, ein Datenaustausch durchgeführt.

Es ist bevorzugt, dass die Fernsteuereinrichtung zumindest zwei zweite Bedienelemente umfasst. Somit können zwei oder mehr sicherheitsrelevante Bedienoperationen von der Fernsteuereinrichtung iniitiert werden.

Gemäß einer Ausführungsform ist es vorgesehen, dass das zweite Bedienelement ein Nothaltknopf und/oder ein Schlüsselschalter ist. Mittels des Nothaltknopfs kann an der zugeordneten Bearbeitungsmaschine ein Nothalt ausgelöst werden. Der Schlüsselschalter kann dazu genutzt werden, zwischen zwei Betriebsmodi der Bearbeitungsmaschine umzuschalten, insbesondere einem Automatikbetrieb ("0") und einem Einrichtbetrieb ("1"). Die Auswahl der jeweiligen Betriebsart ist sicherheitsrelevant, da im Einrichtbetrieb bestimmte Sicherheitsmerkmale der Bearbeitungsmaschine deaktiviert sind (beispielsweise Betrieb der Bearbeitungsmaschine bei geöffneter Schutzeinhausung). Der Einrichtbetrieb und der Automatikbetrieb sind beispielsweise in der Norm DIN EN 12417 definiert.

Bevorzugt umfasst die Fernsteuereinrichtung zumindest zwei zweite Bedienelemente, wobei zumindest eines der Bedienelemente, insbesondere der Nothaltknopf, an einer Seitenfläche, bevorzugt einer Schmalfläche der Fernsteuereinrichtung angebracht ist.

Die Fernsteuereinrichtung kann eine Anzeigeeinrichtung, insbesondere einen Bildschirm, umfassen. Somit kann der Bediener beispielsweise Funktionen aus einem Menü auswählen. Besonders bevorzugt ist als Anzeigeeinrichtung ein Touchscreen.

Gemäß einer Ausführungsform ist es vorgesehen, dass das erste Bedienelement ein wechselnd belegbares oder ein definiert belegtes Bedienelement ist. Bei einem wechselnd belegbaren Bedienelement kann diesem Bedienelement eine bestimmte Bedienoperation zugewiesen werden, insbesondere je nach Maschinentyp. Wird die Fernsteuereinrichtung mit einer bestimmten Bearbeitungsmaschine gekoppelt oder verbunden, so wird das wechselnd belegbare Bedienelement mit einer dieser Maschine entsprechenden Bedienoperation belegt. Dies hat den Vorteil, dass die Fernsteuereinrichtung universeller einsetzbar ist.

Bei einem definiert belegten Bedienelement ist dieses stets mit einer bestimmten Bedienoperation belegt. Im Falle eines definiert belegten ersten Bedienelements kann dieses beispielsweise ausgewählt sein aus: einer Pfeiltaste, einer OK-Taste, einer Taste zum Betätigen eines Verfahrweges oder einem Potentiometer.

Es ist bevorzugt, dass die Kommunikationseinrichtung der Fernsteuereinrichtung nach einem Performance Level d nach DIN EN ISO 13849-1 ausgebildet ist.

Gemäß einer weiteren Ausführungsform weist die Fernsteuereinrichtung einen Kontaktanschluss auf, um Energie und/oder Daten zur Fernsteuereinrichtung zu übertragen. Somit kann die Fernsteuereinrichtung in eine Aufnahmevorrichtung an einer Bearbeitungsmaschine eingelegt oder eingeführt werden, um die Fernsteuereinrichtung aufzuladen und/oder einen kabelgebundenen Datenaustausch durchzuführen.

Es ist bevorzugt, dass die Fernsteuereinrichtung einen Lautsprecher und/oder eine Einrichtung zur Abgabe eines haptisch wahrnehmbaren Signals aufweist. Beispielsweise kann die Fernsteuereinrichtung vibrieren. Auf diese Weise wird die Anwenderfreundlichkeit weiter gesteigert.

Bevorzugt ist als Kommunikationseinrichtung eine Funksende-/Empfangseinrichtung, wobei weiter bevorzugt ist, dass die Funksende-/Empfangseinrichtung in einem Frequenzbereich von 2,4 GHz bis 2,5 GHz arbeitet.

Die Wiederholungsrate kann in einem Bereich von 50ms bis 150ms liegen, bevorzugt im Bereich von 100ms bis 150ms, besonders bevorzugt im Bereich von 120ms bis 130ms. In einem konkreten Beispiel bedeutet dies, dass alle 125ms ein Datenpaket gesendet und/oder empfangen wird.

Beispielsweise sendet die Kommunikationseinrichtung der Fernsteuereinrichtung in einer bestimmten Wiederholungsrate, rein beispielhaft alle 125ms, ein Datenpaket an die Antenne der Bearbeitungsmaschine. Dieses Datenpaket kann verschiedene Maßnahmen zur Übertragungssicherung enthalten (CRC16, Programmzähler, Token).

Das Funkmodul der Bearbeitungsmaschine überprüft die Gültigkeit des Datenpakets anhand der Maßnahmen und sendet ein Bestätigungssignal (Datenpaket empfangen) an die Fernsteuereinrichtung zurück. In dem zurückgesendeten Paket können Nutzdaten der Maschinensteuerung, des Funkmoduls und/oder des Notausmoduls an die Fernsteuereinrichtung enthalten. Das Funkmodul sendet somit nach Aufforderung durch die Fernsteuereinrichtung.

Wenn nach einer bestimmten Anzahl durch die Funksteuereinrichtung gesendeter Pakete kein Bestätigungssignal empfangen wird, schaltet das Notausmodul die Maschine in sicheren Zustand (Not-Halt).

Ferner betrifft die Erfindung ein System umfassend eine Fernsteuereinrichtung sowie eine Bearbeitungsmaschine, sowie eine Verwendung der Fernsteuereinrichtung mit einer Bearbeitungsmaschine. Zuvor genannte Merkmale können jeweils mit der Fernsteuereinrichtung gemäß dem beanspruchten System oder der Fernsteuereinrichtung gemäß der genannten Verwendung kombiniert werden.

### Kurze Beschreibung der Figur

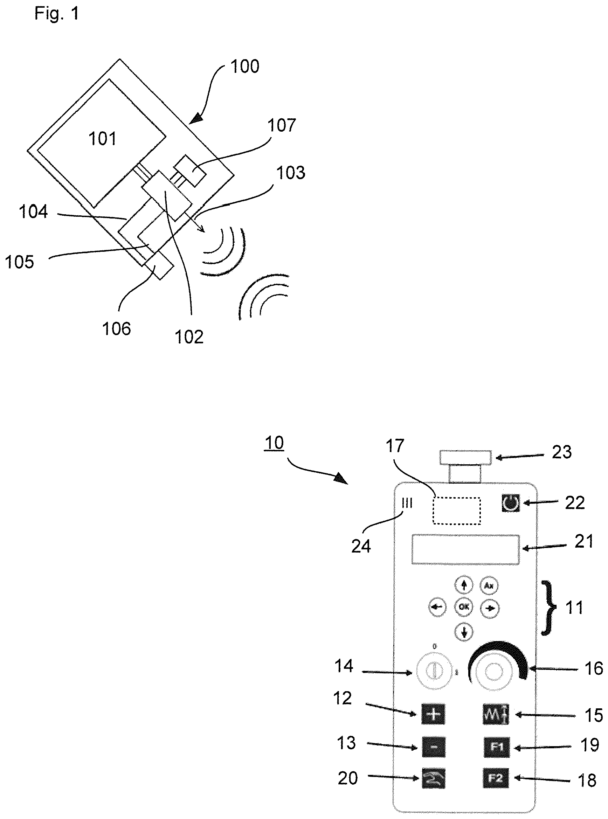

- Figur 1: zeigt in einer schematischen Ansicht eine mit einer Maschinensteuerung interagierende Fernsteuereinrichtung gemäß der vorliegenden Erfindung

### Detaillierte Beschreibung der bevorzugten Ausführungsform

Nachfolgend wird anhand der beigefügten Figur eine bevorzugte Ausführungsform der vorliegenden Erfindung im Detail erläutert. Weitere in diesem Zusammenhang genannte Modifikationen bestimmter Einzelmerkmale können jeweils einzeln miteinander kombiniert werden, um weitere Ausführungsformen auszubilden. Die vorliegende Ausführungsform ist dabei rein beispielhaft zu verstehen, um den Gedanken der vorliegenden Erfindung deutlicher darzustellen.

Figur 1 zeigt eine tragbare Fernsteuereinrichtung 10, die von einem Maschinenbediener in der Hand gehalten und zur Betätigung bestimmter Bedienoperationen eingesetzt werden kann. Nachfolgend verwendete Angaben wie "oberhalb" oder "unterhalb" betreffen Definitionen anhand der Darstellung der Fernsteuereinrichtung 10 in Figur 1, die eine Ausrichtung der Fernsteuereinrichtung 10 im Rahmen einer üblichen Verwendung in der Hand des Maschinenbedieners zeigt.

Die Fernsteuereinrichtung 10 umfasst im vorliegenden Ausführungsbeispiel eine Vielzahl von Bedienelementen, wobei mit bestimmten Bedienelementen sicherheitsrelevante Bedienoperationen und mit anderen Bedienelementen nichtsicherheitsrelevante Bedienoperationen durchgeführt werden können. Bedienelemente für sicherheitsrelevante und nichtsicherheitsrelevante/ weniger sicherheitsrelevante Bedienelemente sind jedoch im vorliegenden Ausführungsbeispiel in einer Fernsteuereinrichtung 10 zusammengefasst.

Ferner umfasst die Fernsteuereinrichtung 10 eine Kommunikationseinrichtung 17, die eingerichtet ist, einen Datenaustausch mit einer Bearbeitungsmaschine, insbesondere einer Antenne einer Bearbeitungsmaschine, durchzuführen. Hierfür ist eine definierte Wiederholungsrate vorgesehen. Die Kommunikationseinrichtung 17 ist im Gehäuse der Fernsteuereinrichtung 10 aufgenommen und in Figur 1 lediglich schematisch angedeutet.

Die Fernsteuereinrichtung 10 umfasst einen Ein-/Ausschalter 22, mit dem die Fernsteuereinrichtung 10 aktiviert werden kann. Im vorliegenden Ausführungsbeispiel ist der Ein-/Ausschalter 22 oberhalb eines Bildschirms 21 (Display) angeordnet. Auf dem Display können beispielsweise verschiedene Auswahlmöglichkeiten angezeigt werden.

Die Fernsteuereinrichtung 10 umfasst ferner Pfeiltasten 11, die im vorliegenden Ausführungsbeispiel unterhalb des Bildschirms 21 angeordnet sind. Die Pfeiltasten 11 ermöglichen einen Bedienbefehl in jeweils zueinander senkrechten Richtungen. Ferner ist mittig zu den Pfeiltasten 11 eine Bestätigungstaste (OK) angeordnet.

Unterhalb der Pfeiltasten 11 sind an der Fernsteuereinrichtung 10 zwei Spalten von weiteren Bedienelementen angeordnet.

In der in Figur 1 gezeigten rechten Spalte sind ein Schlüsselschalter 14, eine Taste für einen positiven Verfahrenweg 12, eine Taste für einen negativen Verfahrenweg 13 sowie eine Vorschubfreigabe 20 vorgesehen. Mit dem Schlüsselschalter 14 kann eine sicherheitsrelevante Bedienoperation durchgeführt werden. In einer benachbarten Spalte (rechte Seite in Fig. 1) sind ein Potentiometer 16, eine Vorschubfreigabetaste 15, ein F1-Schalter 19 sowie ein F2-Schalter 18 vorgesehen.

Ferner umfasst die Fernsteuereinrichtung 10 einen Nothaltknopf 23, der im vorliegenden Ausführungsbeispiel an einer oberen Stirnseite der Fernsteuereinrichtung 10 angebracht ist. Der Nothaltknopf ist beispielsweise in einer Signalfarbe ausgeführt. Mit dem Nothalteknopf 23 kann eine sicherheitsrelevante Bedienoperation ausgelöst werden.

Die Fernsteuereinrichtung 10 umfasst im vorliegenden Ausführungsbeispiel ferner einen Lautsprecher 24 (Öffnungen im Gehäuse der Fernsteuereinrichtung), der beispielhaft in einem Bereich oberhalb des Bildschirms 21 vorgesehen ist. In einer anderen Ausführungsform können die Öffnungen für den Lautsprecher auch an der Rückseite der Fernsteuereinrichtung 10 oder an einer Schmalseite der Fernsteuereinrichtung vorgesehen sein.

Die Fernsteuereinrichtung 10 kann beispielsweise sowohl für Durchlaufmaschinen als auch für CNC-Stationärmaschinen zum Einsatz kommen. Die konkrete Funktion und Belegung der genannten Bedienelemente ist dabei teilweise abhängig vom Maschinentyp.

Die Fernsteuereinrichtung 10 interagiert mittels einer in Fig. 1 nicht dargestellten Antenne mit einer Maschinensteuerung 101 einer in Figur 1 lediglich schematisch dargestellten Bearbeitungsmaschine 100. Die Interaktion erfolgt dabei über eine drahtlose Verbindung, insbesondere Funkverbindung. Beispielsweise kann die Funkverbindung in einem Frequenzband von 2,4-2,5 GHz liegen. Als ein Ausführungsbeispiel kann eine Bluetooth-Verbindung genutzt werden.

Da der Nothaltknopf 23 und der Schlüsselschalter 14 sicherheitsrelevante Bedienoperationen auslösen können, oder im Notfall auch müssen, werden zwischen der Funksteuereinrichtung 10 und der Maschinensteuerung 101 fortlaufend, oder in sehr kurzen Zeitintervallen Datenpakete ausgetauscht, um sicherzustellen, dass die sicherheitsrelevanten Bedienoperationen bei Bedarf ausgelöst werden können.

Wird eine bestimmte Anzahl aufeinander folgender Datenpakete nicht ausgetauscht, oder durch die Maschinensteuerung 101 empfangen, so wird durch die Maschinensteuerung 101 ein Nothalt ausgelöst. Dieser Fall kann insbesondere dann auftreten, wenn die Funkverbindung gestört ist, die Fernsteuereinrichtung 10 ausfällt, oder die Fernsteuereinrichtung aus dem Empfangsbereich der Bearbeitungsmaschine entfernt wird.

Der maschinenseitige Aufbau ist dabei im Wesentlichen wie folgt ausgebildet. Die Bearbeitungsmaschine 100 umfasst eine Maschinensteuerung 101, die beispielsweise als eine speicherprogrammierbare Steuerung (SPS) ausgeführt ist. Alternativ, ist es auch möglich, eine lokale Steuerung, beispielsweise an einem Aggregat zum direkten Antrieb entlang einer Achse, zu kontaktieren.

Ferner umfasst die Bearbeitungsmaschine 100 ein Funkmodul 102, welches mit der Maschinensteuerung 101 kabelgebunden in Verbindung steht. Im vorliegenden Ausführungsbeispiel handelt es sich um eine Festverdrahtung. Alternativ ist es auch möglich, ein BUS-System zu verwenden. Mit einem BUS-System könnte das Einsatzspektrum nochmals erweitert werden.

Am Funkmodul 102 ist eine Antenne 103 angeschlossen, die eine Funkverbindung zur Fernsteuereinrichtung 10 herstellen kann. Ferner steht das Funkmodul mit einem Notaus-Modul 107 in Verbindung. Das Notaus-Modul 107 ist vorliegend durch eine Relaisschaltung oder als eine Sicherheitssteuerung ausgeführt. Wird ein Nothalt-Signal empfangen, oder wie nachfolgend detaillierter beschrieben, eine fehlerhafte Datenverbindung zwischen der Fernsteuereinrichtung 10 und dem Funkmodul 103 detektiert, so gibt das Notaus-Modul 107 einen Notausbefehl an die Maschinensteuerung 101 weiter.

Das Funkmodul 102 überprüft die Gültigkeit des Datenpakets anhand der Maßnahmen und sendet ein Bestätigungssignal (Datenpaket empfangen) an die Fernsteuereinrichtung zurück. In dem zurückgesendeten Paket können Nutzdaten der Maschinensteuerung, des Funkmoduls und/oder des Notausmoduls an die Fernsteuereinrichtung enthalten. Das Funkmodul sendet somit nach Aufforderung durch die Fernsteuereinrichtung.

Wenn nach einer bestimmten Anzahl durch die Funksteuereinrichtung gesendeter Pakete kein Bestätigungssignal empfangen wird, schaltet das Notausmodul die Maschine in einen sicheren Zustand (Not-Halt).

Die Bearbeitungsmaschine 100 umfasst ein BUS-System 104 sowie eine Stromversorgung 105 für eine Ladeschale 106 (Aufnahmeeinrichtung). Die Ladeschale 106 ist an einem zugänglichen Abschnitt der Bearbeitungsmaschine 100 angebracht, und dazu eingerichtet, die Fernsteuereinrichtung 10 derart aufzunehmen, dass diese unter anderem aufgeladen werden kann. Darüber hinaus kann durch Aufnahme der Fernsteuereinrichtung 10 in der Ladeschale 106 eine Verknüpfung mit der konkreten Bearbeitungsmaschine bzw. deren Maschinensteuerung durchgeführt werden. Mit anderen Worten wird die Fernsteuereinrichtung 10 mit der jeweiligen Bearbeitungsmaschine mittels einer Kopplungstechnologie, wie sie beispielsweise von Bluetooth oder NFC (Near Field Communication) bekannt ist, gepaart.

Auf diese Weise ist es möglich, die auch für andere Bearbeitungsmaschinen einsetzbare Funksteuereinrichtung 10 mit der konkreten Bearbeitungsmaschine 100 zu verknüpfen, sodass der Datenaustausch zwischen der Funksteuereinrichtung 10 und der Maschinensteuerung 101 der Bearbeitungsmaschine 100 und nicht mit der Maschinensteuerung einer anderen Bearbeitungsmaschine durchgeführt wird.

Nachfolgend sollen mögliche Bedienoperationen der Fernsteuereinrichtung 10 für verschiedene Maschinentypen beschrieben werden. Zunächst wird der Anwendungsfall erläutert, bei dem die Funksteuereinrichtung 10 mit einer Durchlaufmaschine interagiert.

Mit den Pfeiltasten kann anhand einer Anzeige am Bildschirm 21 eine Achse ausgewählt werden. Beispielsweise wird als Achse eine Verfahrachse X eines Bearbeitungsaggregats der Bearbeitungsmaschine 100 ausgewählt. Die gewählte Achse, im Beispiel die Verfahrachse X, kann nunmehr die Grundlage für eine nachfolgende Bedienoperation bieten. Beispielsweise kann das Bearbeitungsaggregat entlang der X-Achse verfahren werden. Welche Achsen zur Auswahl stehen, ist abhängig von der Maschinenkonfiguration.

Der Schlüsselschalter 14 ermöglicht eine sicherheitsrelevante Bedienoperation, nämlich eine Auswahl zwischen einem Automatikbetrieb ("0") und einem Einrichtbetrieb ("1").

Abhängig von der mit dem Schlüsselschalter 14 gewählten Betriebsart können mit der Vorschubfreigabetaste 15 folgende Bedienoperationen gewählt werden:
Im Einrichtbetrieb (Schlüsselschalter 14 auf "1"):
- Der Vorschub läuft solange der Taster betätigt ist Im Automatikbetrieb (Schlüsselschalter 14 auf "0"):
   - Durch Drücken der Taste startet der Vorschub
   - Vorschub stoppt, wenn wieder in den Einrichtbetrieb geschaltet wird

Ferner ermöglicht die Fernsteuereinrichtung 10 einen sogenannten Tippbetrieb, der die folgenden Schritte ermöglicht:
1. Am Bildschirm 21 wird mittels der Pfeiltasten 11 ein Aggregat der Bearbeitungsmaschine 100 vorgewählt;
2. Mittels des Schlüsselschalters 14 wird auf den Einrichtbetrieb geschaltet (Position "1" des Schlüsselschalters 14);
3. Mittels eines am Bildschirm 21 angezeigten Menüs wird eine Achse ausgewählt;
   3.1 Für positive Verfahrwege wird die Taste 12 gedrückt, wodurch bei gehaltener Taste 12 die Achse in eine positive Richtung verfahren wird;
   3.2 Für negative Verfahrwege wird die Taste 13 gedrückt, wodurch bei gehaltener Taste 13 die Achse in eine negative Richtung verfahren wird.

Die Fernsteuereinrichtung 10 ermöglicht über die nachfolgend beschriebenen Schritte die Freigabe des Vorschubs:
1. Schlüsselschalter 14 auf den Einrichtbetrieb schalten (Position 1 des Schlüsselschalters 14), wodurch der Vorschub gestoppt wird;
2. Vorschubfreigabetaste 15 wird gedrückt, wodurch bei gedrückter Vorschubfreigabetaste 15 der Vorschub läuft, solange die Vorschubfreigabetaste 15 gedrückt gehalten wird;
3. Nachfolgend wird der Schlüsselschalter 14 auf den Automatikbetrieb geschaltet
4. Durch Betätigung der Vorschubfreigabetaste 15 läuft der Vorschub, wobei der Vorschub beispielsweise durch Umschalten des Schlüsselschalters auf den Einrichtbetrieb wieder gestoppt werden kann.

Nachfolgend wird der Einsatz der Fernsteuereinrichtung 10 bei einer CNC-Bearbeitungsmaschine beschrieben.

Mittels der Fernsteuereinrichtung 10 wird ein manuelles Verfahren der einzelnen Achsen ermöglicht. Darüber hinaus werden dem Maschinenbediener Hilfsfunktionen zum Einfahren von Werkstücken angeboten. Beispiele bestimmter beispielhafter Betriebsmodi sollen wie folgt erläutert werden.

Insbesondere wird ein sogenannter kontinuierlicher Tippbetrieb ermöglicht. Im Rahmen dessen wird durch Betätigung der Tasten 12 oder 13 (Minus oder Plus) eine kontinuierliche Bewegung durchgeführt, solange die jeweilige Taste 12 oder 13 betätigt wird.

Im Rahmen eines sogenannten inkrementellen Tippbetriebs erfolgt eine Bewegung mit einer definierten Strecke, die durch einmalige Betätigung einer Tipptaste ausgelöst wird (ebenfalls mittels der Tasten 12, 13 der Funksteuereinrichtung 10).

Je nach Ausführungsvariante der Bearbeitungsmaschine können die Tastenfunktionen gewählt werden.

Ein möglicher Verfahrensablauf bei der Auswahl des Tippbetriebs ist dabei wie folgt:
1. Betriebsart mittels der Pfeiltasten 11 am Bildschirm 21 auswählen;
2. Bearbeitungstisch mittels der Pfeiltasten 11 am Bildschirm 21 auswählen;
3. Aggregat mittels der Pfeiltasten 11 am Bildschirm 21 auswählen;
Daraufhin startet der Tippbetrieb und am Bildschirm 21 wird ein Dialogfenster geöffnet.

Die Vorschübe der Achsen können sowohl beim manuellen als auch beim automatischen Verfahren mittels des Potentiometers 16 prozentual reguliert werden. Hierzu kann wie folgt vorgegangenen werden:
1. Potentiometer 16 drehen und den gewünschten Wert einstellen;
   1.1 Bei automatischen Programmabläufen wird der programmierte Vorschub auf den eingestellten Wert prozentual reduziert (0-100%);
   1.2 Beim manuellen Verfahren der Achsen wird je nach eingestelltem Wert mit einer Geschwindigkeit von 0 bis zur am Bildschirm 21 eingestellten Vorschubgeschwindigkeit verfahren.

Mittels der Pfeiltasten 11 wird eine Verfahrachse am Bildschirm 21 ausgewählt. Welche Achsen zur Auswahl stehen, ist dabei abhängig von der Maschinenkonfiguration.

Um ein manuelles Verfahren zu initiieren, kann die Taste 12 für ein Verfahren in einer positiven Achsrichtung und die Taste 13 zum Verfahren in einer negativen Achsrichtung gedrückt werden.

Um einen inkrementellen Tippbetrieb durchzuführen, können die nachfolgenden Bedienschritte an der Fernsteuereinrichtung 10 durchgeführt werden:
1. Taste 15 drücken und halten
2. Taste 12 oder 13 zusätzlich drücken
Daraufhin verfährt die ausgewählte Achse um die am Bildschirm 21 angegebene Schrittweite.

Als nachfolgende mögliche Option kann wie folgt vorgegangen werden:
2a. Taste 12 oder 13 mehrfach hintereinander betätigen, so dass die eingestellte Schrittweite um die Anzahl der Betätigungen multipliziert und die ausgewählte Achse um die multiplizierte Schrittweite verfahren wird. Dabei wird, wenn die Achse verfahren und die Taste 15 wieder losgelassen wird, der Verfahrsatz abgebrochen.

Im vorliegenden Ausführungsbeispiel ist der Taste 18 (F2) die Funktion zum Anheben einer Sicherheitshaube an der Bearbeitungsmaschine zugeordnet. Ein möglicher Verfahrensablauf ist dabei wie folgt: Zunächst wird die Taste 18 während des normalen Programmablaufs betätigt.

Daraufhin werden bei Bearbeitungsmaschinen ohne zusätzliche Umhausung die Achsen gestoppt, die Spindel gestoppt und die Sicherheitshaube von einer Bearbeitungsposition beispielsweise nach oben gefahren. Wenn der Maschinenbediener nachfolgend die Taste 18 erneut drückt, fährt die Sicherheitshaube wieder in die Bearbeitungsposition und die Bearbeitung wird fortgesetzt.

Alternativ wird bei einer Bearbeitungsmaschine mit einer Umhausung die Haube nach oben gefahren. Wird nachfolgend durch den Maschinenbediener die Taste 20 gedrückt, so wird der Programmlauf fortgesetzt. Ein Betätigen der Taste 18 führt dazu, dass die Haube auf eine Bearbeitungsposition gefahren und die Bearbeitung fortgesetzt wird.

Eine weitere Bedienmöglichkeit durch den Maschinenbediener betrifft die Freigabe des Vorschubs. Dabei wird zunächst die Taste 20 gedrückt. Die Freigabe des Vorschubs erfolgt bei einer oder mehrerer der nachfolgend genannten Aktionen:Probefahrt ohne Werkstück, Simulationsbetrieb, Handsatz, Aufräumprogramm.

Probefahrt ohne Werkstück bedeutet, dass es üblicherweise nicht möglich ist, ohne Werkstück eine Bearbeitung auszuführen, da die Bearbeitungsmaschine über einen Sensor an der Spannvorrichtung, z.B. Vakuum-Sauger, feststellt, dass kein Werkstück vorhanden ist. Über diese Betriebsart wird die Überwachung des Werkstücks überbrückt, so dass ein Bearbeitungsprogramm ohne Werkstück gefahren werden kann.

Im Falle des Simulationsbetriebs wird der Arbeitsablauf mit Abstand zum Werkstück absolviert, so dass bei gespanntem Werkstück dieses nicht bearbeitet wird.

Der sogenannte Handsatz-Betrieb ist darauf gerichtet, einen NC-Code an der Maschinenbedienung einzugeben, der über eine Taste 20 der Fernsteuereinrichtung freigegeben/bestätigt wird. Dies bedeutet, dass die Bearbeitungsmaschine den Befehlssatz durchführt, so lange die Taste gedrückt bleibt.

Aufräumprogramm bedeutet, dass bei dieser Betriebsart das in der Bearbeitungseinheit gespannte Werkzeug in den Werkzeugwechsler bewegt wird. Dies wird beispielsweise durchgeführt, wenn das Werkzeug bei einer Bearbeitung beschädigt wurde.

## Patentansprüche

1. Fernsteuereinrichtung (10) zur Interaktion mit einer Bearbeitungsmaschine, insbesondere einer Holzbearbeitungsmaschine zur Bearbeitung von Werkstücken, aufweisend:
Zumindest ein erstes Bedienelement (12, 13, 15, 16, 18, 19, 20) zur Durchführung einer Bedienoperation an der Bearbeitungsmaschine,
zumindest ein zweites Bedienelement (14, 23) zur Durchführung einer sicherheitsrelevanten Bedienoperation an der Bearbeitungsmaschine, und
eine Kommunikationseinrichtung (17), die eingerichtet ist, einen Datenaustausch mit einer definierten Wiederholungsrate durchzuführen.

2. Fernsteuereinrichtung (10) gemäß Anspruch 1, **dadurch gekennzeichnet, dass** die Fernsteuereinrichtung (10) zumindest zwei zweite Bedienelemente (14, 23) umfasst.

3. Fernsteuereinrichtung (10) gemäß Anspruch 1 oder 2, **dadurch gekennzeichnet, dass** das zweite Bedienelement ein Nothaltknopf (23) und/oder ein Schlüsselschalter (14) ist.

4. Fernsteuereinrichtung (10) gemäß Anspruch 1 oder 2, **dadurch gekennzeichnet, dass** die Fernsteuereinrichtung zumindest zwei zweite Bedienelemente (14, 23) umfasst, wobei zumindest eines der Bedienelemente, insbesondere der Nothaltknopf (23), an einer Seitenfläche der Fernsteuereinrichtung (10) angebracht ist.

5. Fernsteuereinrichtung (10) gemäß einem der vorangegangenen Ansprüche, **dadurch gekennzeichnet, dass** die Fernsteuereinrichtung (10) eine Anzeigeeinrichtung, insbesondere einen Bildschirm (21), umfasst.

6. Fernsteuereinrichtung (10) gemäß einem der vorangegangenen Ansprüche, **dadurch gekennzeichnet, dass** das erste Bedienelement ein wechselnd belegbares oder ein definiert belegtes Bedienelement ist, , wobei bevorzugt ist, dass dem wechselnd belegbaren Bedienelement (18, 19) je nach Maschinentyp eine Bedienoperation zugewiesen ist.

7. Fernsteuereinrichtung (10) gemäß einem der vorangegangenen Ansprüche, **dadurch gekennzeichnet, dass** die Fernsteuereinrichtung einen Kontaktanschluss aufweist, um Energie und/oder Daten zur Fernsteuereinrichtung (10) zu übertragen.

8. Fernsteuereinrichtung (10) gemäß einem der vorangegangenen Ansprüche, **dadurch gekennzeichnet, dass** die Fernsteuereinrichtung (10) einen Lautsprecher (24) und/oder eine Einrichtung zur Abgabe eines haptisch wahrnehmbaren Signals aufweist.

9. Fernsteuereinrichtung (10) gemäß einem der vorangegangenen Ansprüche, **dadurch gekennzeichnet, dass** die Kommunikationseinrichtung (17) eine Funksende-/Empfangseinrichtung ist, wobei bevorzugt ist, dass die Funksende-/ -Empfangseinrichtung in einem Frequenzbereich von 2,4 GHz bis 2,5GHz arbeitet.

10. Fernsteuereinrichtung (10) gemäß einem der vorangegangenen Ansprüche, **dadurch gekennzeichnet, dass** die Wiederholungsrate im Bereich von 50ms bis 150ms liegt, bevorzugt im Bereich von 100ms bis 150ms, besonders bevorzugt im Bereich von 120ms bis 130ms.

11. System umfassend eine Fernsteuereinrichtung (10) gemäß einem der vorangegangenen Ansprüche und eine Bearbeitungsmaschine (100) mit einer Maschinensteuerung (101) und einem Funkmodul (102),
wobei die Fernsteuereinrichtung (10) eingerichtet ist, Signale zum Funkmodul (102) zu senden und/oder Signale vom Funkmodul (102) zu empfangen, wodurch die Fernsteuereinrichtung (10) mit der Maschinensteuerung (101) interagiert.

12. System gemäß Anspruch 11, **dadurch gekennzeichnet, dass** die Bearbeitungsmaschine (100) eine Aufnahmeeinrichtung (106) zur Aufnahme der Fernsteuereinrichtung (10) aufweist,
wobei die Aufnahmeeinrichtung (106) mit einer Stromversorgung (105) zum Aufladen der Fernsteuereinrichtung (10) und/oder einem BUS-System (104) zum kabelgebundenen Datenaustausch mit der Maschinensteuerung (101) versehen ist.

13. Verwendung einer Fernsteuereinrichtung (10), bevorzugt einer Fernsteuereinrichtung gemäß einem der Ansprüche 1-10, zur Interaktion mit einer Bearbeitungsmaschine, insbesondere einer Holzbearbeitungsmaschine, wobei die Fernsteuereinrichtung (10) zumindest ein erstes Bedienelement zur Durchführung einer Bedienoperation an der Bearbeitungsmaschine und zumindest ein zweites Bedienelement zur Durchführung einer sicherheitsrelevanten Bedienoperation an der Bearbeitungsmaschine aufweist,
wobei die Fernsteuereinrichtung eine Kommunikationseinrichtung aufweist, die eingerichtet ist, einen Datenaustausch mit einer definierten Wiederholungsrate durchzuführen..

14. Verwendung gemäß Anspruch 13, **dadurch gekennzeichnet, dass** die Fernsteuereinrichtung (10) zumindest zwei zweite Bedienelemente umfasst, insbesondere einen Nothaltknopf (23) und einen Schlüsselschalter (14).

15. Verwendung gemäß Anspruch 13 oder 14, **dadurch gekennzeichnet, dass** mit dem zumindest einen ersten Bedienelement eine Verfahrbewegung eines Bearbeitungsaggregats durchgeführt wird.
